# EUROPÄISCHE PATENTANMELDUNG

(11) **EP 3 961 173 A1**
(43) Veröffentlichungstag der Anmeldung: **02.03.2022**
(21) Anmeldenummer: 21193323.9
(22) Anmeldetag: 26.08.2021
(51) Int. Cl.: G01L 1/14, G01L 1/20

(54) **KAPAZITIVER UND/ODER RESISTIVER DEHNUNGSSENSOR SOWIE DEHNUNGSSENSOR-SYSTEM UND DEREN VERWENDUNG**

(30) Priorität: 27.08.2020 DE 102020210858
(71) Anmelder: FRAUNHOFER-GESELLSCHAFT zur Förderung der angewandten Forschung e.V., 80686 München (DE)
(72) Erfinder: Böse, Holger, 97082 Würzburg (DE); Ehrlich, Johannes, 97082 Würzburg (DE)
(74) Vertreter: Pfenning, Meinig & Partner mbB

(57) **Zusammenfassung**

Die Erfindung betrifft einen kapazitiven und/oder resistiven Dehnungssensor, der mindestens ein Sensorelement und mindestens ein Steifigkeitselement enthält, die mechanisch miteinander verbunden sind. Das Sensorelement enthält dabei mindestens eine dielektrische und/oder resistive Elastomerfolie und das Steifigkeitselement besitzt eine größere relative Dehnungs-Federkonstante in Dehnungsrichtung als das Sensorelement. Weiterhin sind in der mindestens einen dielektrischen und/oder resistiven Elastomerfolie mindestens zwei elektrische Zuleitungen für den Anschluss einer Messvorrichtung zur Bestimmung der elektrischen Kapazität und/oder des elektrischen Widerstandes angeschlossen. Ebenso betrifft die Erfindung ein Dehnungssensor-System, das mehrere dieser Dehnungssensoren enthält.

## Beschreibung

Die Erfindung betrifft einen kapazitiven und/oder resistiven Dehnungssensor, der mindestens ein Sensorelement und mindestens ein Steifigkeitselement enthält, die mechanisch miteinander verbunden sind. Das Sensorelement enthält dabei mindestens eine dielektrische und/oder resistive Elastomerfolie und das Steifigkeitselement besitzt eine größere relative Dehnungs-Federkonstante in Dehnungsrichtung als das Sensorelement. Weiterhin sind in der mindestens einen dielektrischen und/oder resistiven Elastomerfolie mindestens zwei elektrische Zuleitungen für den Anschluss einer Messvorrichtung zur Bestimmung der elektrischen Kapazität und/oder des elektrischen Widerstandes angeschlossen. Ebenso betrifft die Erfindung ein Dehnungssensor-System, das mehrere dieser Dehnungssensoren enthält.

In vielen technischen Systemen kommt der Messung von Dehnungen oder Verformungen von Bauteilen durch äußere Belastungen eine wesentliche Bedeutung zu. Dies betrifft beispielsweise die Ausdehnung von statischen Bauteilen in Bauwerken wie Brücken und Gebäuden. Ein anderes Beispiel sind Rotorblätter von Windkraftanlagen, die Längen von etwa 50 m erreichen können. Werden bestimmte Dehngrenzen durch hohe Belastungen überschritten, so kann es im Bauteil zu irreversiblen Schädigungen kommen, die die Sicherheit des Bauwerks beeinträchtigen. Durch eine permanente Überwachung des Dehnungszustandes können solche Schädigungen rechtzeitig erkannt und entsprechende Sicherheitsvorkehrungen eingeleitet werden. Hierzu sind häufig großflächige Dehnungssensoren mit hoher Messempfindlichkeit notwendig.

Elastomerbauteile werden vielfach dort eingesetzt, wo im Gegensatz zu starren Bauteilen relativ starke Verformungen aufgenommen werden sollen, ohne dass es zu Schäden kommt. Doch auch hier gibt es Grenzen, die nicht überschritten werden dürfen. Beispiele hierfür sind Gummilager, Elastomerdämpfer, Gummiriemen, Dichtungen und Membranen. Auch hier spielt die Überwachung der tatsächlichen Dehnung eine wichtige Rolle, um etwaige Überdehnungen und damit Beschädigungen frühzeitig zu erkennen.

Verschiedene Arten von Maschinen führen Bewegungen aus, bei denen sich der Abstand zwischen zueinander bewegten Komponenten in einem definierten Ablauf verändert. Beispiele sind Stoß- oder Schwingungsdämpfer, bei denen sich ein Kolben linear in einem Dämpferrohr bewegt. Mit einem Sensor kann die Kolbenbewegung verfolgt werden, um die Dämpfungswirkung quantitativ zu erfassen. Eine ähnliche Aufgabe besteht bei Stanzmaschinen oder anderen Bearbeitungsmaschinen, bei denen periodische oder auch nichtperiodische Bewegungen durch Abstandsmessungen zwischen definierten Punkten mit einer geeigneten Dehnungssensorik registriert werden sollen. Auch die Bewegungen eines Roboters in mehreren Dimensionen einschließlich der mit dem Roboter verbundenen Greifwerkzeuge fallen in dieses Aufgabengebiet.

Neben dem Einsatz in Bauwerken, im Maschinenbau oder in der Automobilindustrie werden Dehnungssensoren ebenso in vielen weiteren Anwendungsbereichen benötigt. So können mit Dehnungssensoren, die bei der Dehnung nur einen geringen mechanischen Widerstand erzeugen, auch Bewegungen des menschlichen Körpers registriert werden. Dies ist z. B. für Sportler oder auch für Menschen in einer Rehabilitation sinnvoll, um den optimalen Bewegungsablauf zu trainieren. Ein weiteres Beispiel betrifft die Überwachung der Atmungsfunktion von Menschen. Die Atmung kann entweder durch am Körper getragene oder bei liegenden Personen durch in die Unterlage integrierte Dehnungssensoren verfolgt werden. Auch zur Überwachung des Schlafverhaltens kann eine Dehnungssensorik eine wertvolle Unterstützung bieten. Schließlich sind Dehnungssensoren von Interesse, die die Bewegung der Finger in einem Handschuh registrieren. Auf diese Weise können beispielsweise durch gezielte Krümmungen einzelner Finger Steuervorgänge an technischen Systemen vorgenommen werden.

Alle diese Anwendungen verlangen Dehnungssensoren, die eine ausreichende Messempfindlichkeit aufweisen, d. h. bei den auftretenden Dehnungen bzw. Abstandsänderungen muss sich das Messsignal des Dehnungssensors so stark verändern, dass die Messung präzise durchgeführt werden kann. In Anwendungen, bei denen wie bei Brücken, Gebäuden oder Windkraftanlagen große Dimensionen auftreten, müssen die darauf angebrachten Dehnungssensoren außerdem vergleichbare Dimensionen überdecken.

Für die Messung von Dehnungen stehen verschiedene Messmethoden und entsprechende Sensoren bereits zur Verfügung. Die bekanntesten Dehnungssensoren sind Dehnungsmessstreifen. Sie enthalten eine elektrische Widerstandsschicht mit einer genau definierten Form auf einer Trägerfolie, die beispielsweise aus Kunststoff besteht. Bei einer Dehnung der Folie ändert sich der elektrische Widerstand der Schicht in einer charakteristischen Weise, sodass aus der gemessenen Widerstandsänderung die Dehnung ermittelt werden kann. Bei der Dehnungsmessung mit Dehnungsmessstreifen werden überwiegend Brückenschaltungen eingesetzt. Solche Dehnungsmessstreifen werden in der Regel zur Messung von relativ kleinen Dehnungen im Bereich von bis zu einigen Promille verwendet, doch gibt es auch Dehnungsmessstreifen mit einem Messbereich bis zu einigen Prozent. Dabei handelt es sich meist um Sensoren, die Dehnungen auf relativ kleinen Flächen messen.

Zur Messung von großen Dehnungen gibt es dielektrische Elastomersensoren. Sie bestehen aus einer Elastomerfolie, die auf beiden Seiten mit jeweils einer Elektrodenschicht bedeckt ist. Die Elektrodenschichten sind ebenso wie die Elastomerfolie stark dehnbar, ohne dabei ihre elektrische Leitfähigkeit zu verlieren. Die Elastomerfolie mit den beiden Elektrodenschichten bildet einen verformbaren Kondensator. Bei einer Dehnung der Folie ändert sich die elektrische Kapazität in einer charakteristischen Weise, sodass aus der gemessenen Kapazität die Dehnung bestimmt werden kann. Da es sich bei der Sensorfolie um stark dehnbare elastische Materialien handelt, lassen sich mit diesem Messprinzip sehr hohe Dehnungen von bis zu einigen 100 Prozent messen. Mit ihrem Aufbau aus weichen Elastomermaterialien zeichnen sich diese Sensoren durch hohe Robustheit aus. Dielektrische Elastomersensoren eignen sich ebenfalls für Dehnungsmessungen auf ausgedehnten Oberflächen, da sich die Sensoren auch großflächig herstellen lassen. Durch den einfachen Schichtaufbau können solche Sensoren kostengünstig produziert werden.

Wenn dielektrische Elastomersensoren hohen Dehnungen von einigen 10 Prozent ausgesetzt werden, entstehen dabei auch entsprechend große Kapazitätsänderungen, die messtechnisch leicht zu erfassen sind. Bei Dehnungen von unter 1 Prozent oder sogar unter 1 Promille wird die relative Kapazitätsänderung jedoch so klein, dass die Messgenauigkeit stark reduziert ist. Zwar können elektrische Kapazitäten mit einer geeigneten Messelektronik grundsätzlich sehr genau gemessen werden, doch wird die Messgenauigkeit bei sehr kleinen Kapazitätsänderungen durch Störsignale deutlich eingeschränkt. Ein Vorteil wäre es daher, wenn die relative Kapazitätsänderung von dielektrischen Elastomersensoren auch bei kleinen relativen Dehnungen deutlich größer ausfallen würde als bei den bekannten Sensoren.

Die EP 3 282 218 beschreibt einen dielektrischen Elastomersensor, der mit einem Textil verbunden ist, das anisotrop dehnbar ist. Damit erhält auch der dielektrische Elastomersensor eine anisotrope Dehnbarkeit. Ein Steifigkeitselement zur Erhöhung der Messempfindlichkeit ist in dem Sensor nicht enthalten.

Die WO2019/166635 beschreibt einen dielektrischen Elastomersensor, in dem die dielektrische Schicht zwischen den Elektroden eine kleine Menge einer Flüssigkeit enthält, wodurch die Empfindlichkeit des Sensors erhöht wird. Ein Steifigkeitselement ist in dem Sensor nicht enthalten.

In der US 6,809,462 ist eine dielektrische Elastomer-Sensorfolie dargestellt, die zwischen zwei Befestigungen eingespannt ist. Damit kann die Dehnung der Sensorfolie durch die Messung einer Kapazität oder eines Widerstandes bestimmt werden.

In einer Publikation von M. Kollosche et al. "Strongly enhanced sensitivity in elastic capacitive strain sensors", J. Mater. Chem. 21 (2011) 8292-8294 wird eine Erhöhung der Permittivität des dielektrischen Elastomers für eine höhere Kapazität des dielektrischen Elastomersensors durch eine chemische Modifizierung des Elastomers SEBS (poly-(styrene-co-(ethylene-butylene-g-maleic-anhydride)-co-styrene)) erreicht. Ein Steifigkeitselement wird dabei nicht erwähnt.

Die Arbeit von S. Laflamme et al. "Soft Elastomeric Capacitor Network for Strain Sensing Over Large Surfaces", IEEE/ASME Transactions on Mechatronics 18 (2013) 1647-1654 beschreibt die Messung der Ausdehnung eines Balkens bei dessen Biegung mit vier daran befestigten dielektrischen Elastomer-Dehnungssensoren mit einer Länge und Breite von jeweils 70 mm. Ein Steifigkeitselement zur Steigerung der Empfindlichkeit wird auch hier nicht genannt.

Es war somit Aufgabe der vorliegenden Erfindung, einen kapazitiven und/oder resistiven Dehnungssensor bereitzustellen, der eine gegenüber dem Stand der Technik verbesserte Empfindlichkeit aufweist.

Diese Aufgabe wird mit dem kapazitiven und/oder resistiven Dehnungssensor mit den Merkmalen des Anspruchs 1 und mit dem Dehnungssensor-System mit den Merkmalen des Anspruchs 13 gelöst. In Anspruch 15 werden erfindungsgemäße Verwendungen angegeben.

Erfindungsgemäß wird ein kapazitiver und/oder resistiver Dehnungssensor bereitgestellt, der mindestens ein Sensorelement und mindestens ein Steifigkeitselement aufweist, die mechanisch miteinander verbunden sind. Das mindestens eine Sensorelement weist darin mindestens eine dielektrische und/oder resistive Elastomerfolie auf, deren Kapazität und/oder elektrischer Widerstand durch Dehnung der mindestens einen Elastomerfolie veränderbar ist. Das mindestens eine Steifigkeitselement weist dabei eine größere relative Dehnungs-Federkonstante in Dehnungsrichtung als die mindestens eine dielektrische und/oder resistive Elastomerfolie auf. Weiterhin sind an der mindestens einen dielektrischen und/oder resistiven Elastomerfolie mindestens zwei elektrische Zuleitungen für den Anschluss einer Messvorrichtung für die Bestimmung der elektrischen Kapazität und/oder des elektrischen Widerstands angeschlossen.

Die Erfindung betrifft einen elastomerbasierten Dehnungssensor mit kapazitivem oder resistivem Messprinzip, der eine gegenüber dem Stand der Technik stark erhöhte Empfindlichkeit aufweist. Zur Bestimmung der Dehnung enthält der erfindungsgemäße Dehnungssensor zwischen zwei Befestigungspunkten, zwischen denen die Dehnung gemessen werden soll, eine dehnbare Elastomerfolie sowie mindestens ein Steifigkeitselement.

Mit den erfindungsgemäßen Dehnungssensoren auf Elastomerbasis können Dehnungen oder Abstandsänderungen entweder durch Änderungen der elektrischen Kapazität oder des elektrischen Widerstandes gemessen werden. Ein besonderer Vorteil besteht in der hohen Messempfindlichkeit besonders bei solchen Messaufgaben, bei denen kleine Dehnungen bei großen Längen bzw. Abständen gemessen werden sollen. Die Messempfindlichkeit geht weit über die Empfindlichkeit der bisher bekannten dielektrischen und resistiven Elastomersensoren hinaus. Weitere Vorteile sind der einfache Aufbau, die wenig aufwendige Messelektronik mit Mikroprozessoren und die damit verbundenen relativ niedrigen Herstellungskosten, die den Dehnungssensor auch für Massenanwendungen erschließen.

Unter mechanischer Verbindung wird im Rahmen der vorliegenden Erfindung jede kraft-, stoff- oder formschlüssige Verbindung verstanden. Auch Kombinationen dieser Verbindungstechniken sind erfindungsgemäß einsetzbar.

Die relative Dehnungs-Federkonstante K eines Körpers wird definiert als das Verhältnis der einwirkenden Dehnungskraft F und der relativen Längenänderung Δl/l₀ des Körpers, wobei Δl die absolute Längenänderung und lo die Anfangslänge ist. Beispiel: Wenn sich der Körper bei einer Dehnungskraft von 1 N um 10 % dehnt, ist die relative Dehnungs-Federkonstante K = 1N/10% = 0,1 N/%. Wenn die relative Dehnung dimensionslos angegeben wird, d. h. 10 % entspricht einem Wert von 0,1, dann ist die relative Dehnungs-Federkonstante K = 1N/0,1 = 10 N. Die relative Dehnungs-Federkonstante K ist damit gleich der Federkonstante k, die das Verhältnis der einwirkenden Dehnungskraft F und der absoluten Längenänderung Δl des Körpers wiedergibt (k = F/Δl), multipliziert mit der Anfangslänge lo, d. h. K = k l₀ = F/Δl l₀ = F/(Δl/l₀).

Tatsächlich ist die relative Dehnungs-Federkonstante nicht wirklich eine Konstante, da sich das Verhältnis der einwirkenden Dehnungskraft und der relativen Längenänderung des Körpers besonders bei hohen Dehnungen mit der Dehnung verändert. Daher können zwei relative Dehnungs-Federkonstanten nur bei der gleichen Dehnung miteinander verglichen werden. Wegen des üblichen Begriffes der Federkonstante wird dieser hier aber beibehalten.

Es ist bevorzugt, dass die relative Dehnungs-Federkonstante des mindestens einen Steifigkeitselements in Dehnungsrichtung um einen Faktor von mindestens 2 größer ist als die relative Dehnungs-Federkonstante der mindestens einen dielektrischen oder resistiven Elastomerfolie in Dehnungsrichtung, bevorzugt um einen Faktor von mindestens 10, besonders bevorzugt um einen Faktor von mindestens 100, ganz besonders bevorzugt um einen Faktor von mindestens 1000. Diese Vorgabe ermöglicht eine hohe Messempfindlichkeit im Vergleich zum Stand der Technik, da sich die gesamte Dehnung des Dehnungssensors auf die dehnbaren dielektrischen und/oder resistiven Elastomerfolien konzentriert, während das Steifigkeitselement möglichst wenig gedehnt wird.

Eine bevorzugte Ausführungsform sieht vor, dass das Steifigkeitselement in Dehnungsrichtung länger ist als die dielektrische oder resistive Elastomerfolie oder, im Falle mehrerer Steifigkeitselemente und Elastomerfolien, die Gesamtlänge aller Steifigkeitselemente in Dehnungsrichtung größer ist als die Gesamtlänge aller dielektrischen und/oder resistiven Elastomerfolien, bevorzugt um einen Faktor von mindestens 2, besonders bevorzugt um einen Faktor von mindestens 5, ganz besonders bevorzugt um einen Faktor von mindestens 10. Mit steigendem Längenverhältnis konzentriert sich die relative Dehnung des Dehnungssensors immer mehr auf die dielektrische und/oder resistive Elastomerfolie und ergibt somit die gemessene relative Kapazitäts- oder Widerstandsveränderung. Bei mehr als einem in Dehnungsrichtung in Serie angeordnetem Steifigkeitselement sollte die Gesamtlänge der Steifigkeitselemente größer als die Gesamtlänge der dielektrischen und/oder resistiven Elastomerfolien sein. Enthält der erfindungsgemäße Dehnungssensor mehr als ein Steifigkeitselement und mehr als eine dielektrische und/oder resistive Elastomerfolie in einer Serienanordnung entlang der Dehnungsrichtung, so sollte die Gesamtlänge der Steifigkeitselemente größer sein als die Gesamtlänge der dielektrischen und/oder resistiven Elastomerfolien. Mit der Länge des Dehnungssensors ist immer die Länge zwischen den Befestigungsstellen des Dehnungssensors gemeint.

Es ist bevorzugt, dass sich das Steifigkeitselement in Dehnungsrichtung an das Sensorelement oder, im Falle mehrerer Steifigkeitselemente und Sensorelemente, Steifigkeitselemente und Sensorelemente sich alternierend in Dehnungsrichtung aneinander anschließen.

Eine bevorzugte Ausführungsform sieht vor, dass die mindestens eine dielektrische und/oder resistive Elastomerfolie eine Reißdehnung von mindestens 100 %, bevorzugt mindestens 200 %, besonders bevorzugt mindestens 300 % aufweist.

Es ist bevorzugt, dass das mindestens eine Steifigkeitselement senkrecht zur Dehnungsrichtung breiter und/oder dicker ist als das mindestens eine Sensorelement, bevorzugt um einen Faktor von mindestens 2, besonders bevorzugt um einen Faktor von mindestens 5, ganz besonders bevorzugt um einen Faktor von mindestens 10. Mit dieser Maßnahme wird das Verhältnis der relativen Dehnungs-Federkonstanten des Steifigkeitselements und der dielektrischen und/oder resistiven Elastomerfolie im Sinne einer erhöhten Messempfindlichkeit des Dehnungssensors beeinflusst.

Es ist weiter bevorzugt, dass die Breite der mindestens einen dielektrischen und/oder resistiven Elastomerfolie senkrecht zur Dehnungsrichtung größer ist als ihre Länge parallel zur Dehnungsrichtung, bevorzugt um einen Faktor von mindestens 2, besonders bevorzugt um einen Faktor von mindestens 3, ganz besonders bevorzugt um einen Faktor von mindestens 5.

Die bekannten dielektrischen Elastomersensoren haben meist eine Form, bei der die Länge in Dehnungsrichtung größer oder sogar deutlich größer ist als die Breite senkrecht dazu. Eine solche Sensorform führt zu einem näherungsweise linearen Anstieg der Kapazität mit der Dehnung, da sich die Sensorfolie bei der Dehnung in der Breite einschnürt und damit nicht nur die Dicke, sondern auch die Breite abnimmt, wodurch die Kapazitätserhöhung geringer ausfällt. Wenn die Breite der Sensorfolie dagegen deutlich größer als die Länge in Dehnungsrichtung ist, kommt es zu keiner wesentlichen Einschnürung. Damit nimmt die Dicke der dielektrischen Elastomerfolie wegen der Volumenkonstanz bei der Dehnung etwa um den gleichen Faktor ab wie die Länge zunimmt. Die Folge ist ein etwa quadratischer Anstieg der Kapazität mit der Dehnung. Auch dies trägt wesentlich zu einer erhöhten Empfindlichkeit des erfindungsgemäßen Dehnungssensors bei.

Ein weiterer Vorteil für den erfindungsgemäßen Dehnungssensor entsteht dadurch, dass die dielektrische oder resistive Elastomerfolie bei der Befestigung an den Befestigungsstellen, zwischen denen die Dehnung gemessen werden soll, vorgedehnt wird, bevorzugt um mindestens 10 %, besonders bevorzugt um mindestens 30 % und ganz besonders bevorzugt um mindestens 50 %. Auf diese Weise können mit dem Dehnungssensor nicht nur Dehnungen erfasst werden, wenn die Befestigungsstellen des Dehnungssensors auseinanderrücken, sondern auch Stauchungen, wenn die Befestigungsstellen zusammenrücken. Im Fall einer dielektrischen Elastomerfolie führt dies zu einer Kapazitätsabnahme anstatt eines Kapazitätsanstiegs.

Es ist bevorzugt, dass an dem mindestens einen Steifigkeitselement mindestens eine Folie mit hoher Dehnungssteifigkeit befestigt ist, die parallel zur dielektrischen und/oder resistiven Elastomerfolie angeordnet ist, länger als diese und damit nicht gerade ausgerichtet, sondern gewellt ist und als Überdehnungsschutz die Dehnung der dielektrischen Elastomerfolie nur soweit zulässt, bis die Länge der dielektrischen und/oder resistiven Elastomerfolie die Länge der Folie mit hoher Dehnungssteifigkeit erreicht.

Es ist bevorzugt, dass mindestens eine weitere dielektrische und/oder resistive Elastomerfolie auf dem mindestens einen Steifigkeitselement oder auf einem anderen steifen Element angeordnet ist und damit wenig oder nicht gedehnt wird und zur Kompensation von Umgebungseinflüssen wie Temperatur oder Feuchtigkeit verwendet wird. Hiermit werden Umgebungseinflüsse, z. B. durch Temperaturänderung oder Feuchtigkeit auf die Kapazität und/oder den Widerstand erfasst, um diese Einflüsse auf die gemessene Kapazität und/oder den gemessenen Widerstand des Dehnungssensors zu kompensieren.

In einer speziellen Ausführungsform des erfindungsgemäßen Dehnungssensors ist die Messelektronik zur Messung der Kapazität und/oder des Widerstandes auf dem mindestens einen Steifigkeitselement oder auf einem anderen steifen Element angeordnet. Außerdem können weitere Sensoren zur Bestimmung von Temperatur, Feuchtigkeit, chemischen Substanzen und/oder anderen Messgrößen auf dem mindestens einen Steifigkeitselement oder auf einem anderen steifen Element angeordnet sein.

In einer Ausführungsform der Erfindung mit kapazitivem Messprinzip entspricht die dehnbare Elastomerfolie einer dielektrischen Elastomerfolie, d. h. die dehnbare Elastomerfolie besteht vorzugsweise aus einer elektrisch nichtleitfähigen Elastomerfolie als Dielektrikum und zwei leitfähigen Elektrodenschichten auf beiden Seiten der elektrisch nichtleitfähigen Elastomerfolie. Zusätzlich enthält dieser Dehnungssensor mindestens ein Steifigkeitselement, der mit der dehnbaren Elastomerfolie mechanisch verbunden ist. Dabei schließt das Steifigkeitselement an ein Ende der dehnbaren Elastomerfolie in Dehnungsrichtung an. Das Steifigkeitselement weist gegenüber der dehnbaren Elastomerfolie eine deutlich höhere mechanische Steifigkeit auf, im Idealfall eine unendliche Steifigkeit, wodurch keine Dehnung des Steifigkeitselements entsteht. Im Folgenden wird die Längendehnung des Dehnungssensors betrachtet, wenn externe Kräfte an den äußeren Enden der dielektrischen Elastomerfolie und des Steifigkeitselements angreifen und den Dehnungssensor auseinanderziehen.

Wird der erfindungsgemäße Dehnungssensor zwischen seinen Enden gedehnt, so erfolgt die Dehnung damit weitgehend oder vollständig in der dehnbaren Elastomerfolie, während das Steifigkeitselement, auf das wegen der in Dehnungsrichtung seriellen Anordnung die gleiche Kraft wirkt, nur wenig oder gar nicht gedehnt wird. Die relative Dehnung der dehnbaren Elastomerfolie ist damit erheblich größer als in dem Fall, in dem der gesamte Dehnungssensor mit der gleichen Länge nur aus einer dielektrischen Elastomerfolie ohne Steifigkeitselement besteht. Damit ist auch die relative Kapazitätserhöhung zwischen den beiden Elektrodenschichten entsprechend erheblich größer als bei einem Dehnungssensor, der nur aus einer dielektrischen Elastomerfolie besteht. Auf diese Weise werden auch bei kleinen relativen Dehnungen des erfindungsgemäßen Dehnungssensors sehr hohe relative Kapazitätsänderungen erreicht, wodurch die Messempfindlichkeit entsprechend deutlich ansteigt. Zur Messung der elektrischen Kapazität zwischen den Elektroden des dielektrischen Elastomersensors kann eine Kapazitäts-Messvorrichtung mit den elektrischen Zuleitungen verbunden werden.

Im Falle einer dielektrischen Elastomerfolie ist es bevorzugt, dass die dielektrische Elastomerfolie(n) mindestens eine dehnbare elektrisch nicht-leitfähige Elastomerschicht und mindestens zwei dehnbare elektrisch leitfähige Elektrodenschichten aufweist/aufweisen, wobei die elektrisch nicht-leitfähige Elastomerschicht zwischen zwei elektrisch leitfähigen Elektrodenschichten angeordnet ist und durch Dehnung der Elastomerfolie die Kapazität veränderbar ist.

Wenn der erfindungsgemäße Dehnungssensor eine dielektrische Elastomerfolie enthält, kann diese zusätzlich zu der elektrisch nichtleitfähigen Elastomerschicht als Dielektrikum und den beiden elektrisch leitfähigen Elektrodenschichten weitere Dielektrikums- und Elektrodenschichten in alternierender Reihenfolge enthalten. Die Elektrodenschichten werden zu zwei Elektrodensystemen zusammengeschlossen, wobei bei durchgehender Nummerierung die Elektroden mit gerader Nummer zu einem Elektrodensystem und die Elektroden mit ungerader Nummer zum zweiten Elektrodensystem elektrisch kontaktiert werden. Auf diese Weise addieren sich die Kapazitäten der einzelnen Dielektrikumsschichten zu einer größeren Gesamtkapazität des dehnbaren Kondensators. Da die dielektrische Elastomerfolie im erfindungsgemäßen Dehnungssensor wegen ihrer geringen Länge nur eine relativ kleine Kapazität aufweist, kann die Kapazität durch einen solchen Schicht-Stapelprozess bei Bedarf gesteigert werden.

Enthält der erfindungsgemäße Dehnungssensor eine dielektrische Elastomerfolie, so können die äußeren Elektrodenschichten auf ihren Außenseiten zusätzlich mit einer elektrisch nichtleitfähigen Elastomerschicht bedeckt sein, die als Schutzschicht und/oder zur Vermeidung von elektrischen Kurzschlüssen dient.

In einer anderen Ausführungsform der Erfindung mit resistivem Messprinzip ist die dehnbare Elastomerfolie eine resistive Elastomerfolie. Solche resistiven Elastomerfolien sind ebenso wie die kapazitiven dielektrischen Elastomerfolien bereits bekannt. Die resistive Elastomerfolie besteht entweder nur aus einer elektrisch leitfähigen Elastomerschicht oder aus einer elektrisch leitfähigen Schicht auf einer elektrisch nicht leitfähigen Elastomerschicht als Trägerfolie. Zwischen zwei Punkten auf der resistiven Elastomerfolie wird der elektrische Widerstand gemessen, der sich bei der Dehnung in einer charakteristischen Weise verändert. Auch hier wird die resistive Elastomerfolie mit mindestens einem Steifigkeitselement mechanisch verbunden, der an ein Ende der resistiven Elastomerfolie in Dehnungsrichtung anschließt. Das oder die Steifigkeitselement(e) weist/weisen auch hier gegenüber der dehnbaren Elastomerfolie eine deutlich höhere mechanische Steifigkeit auf. Wie bei dem kapazitiven Dehnungssensor zuvor konzentriert sich damit auch bei diesem resistiven Dehnungssensor die Dehnung auf den Bereich der dehnbaren Elastomerfolie, d. h. hier der resistiven Elastomerfolie. Die Messempfindlichkeit bei kleinen relativen Dehnungen ist so ebenfalls deutlich erhöht. Zur Messung des elektrischen Widerstandes des resistiven Elastomersensors kann eine Widerstands-Messvorrichtung mit den elektrischen Zuleitungen verbunden werden.

Für den Fall, dass der Dehnungssensor eine resistive Elastomerfolie aufweist, ist es bevorzugt, dass die resistive Elastomerfolie(n) mindestens eine dehnbare elektrisch leitfähige Elastomerschicht und ggf. mindestens eine elektrisch nicht-leitfähige Elastomerschicht als Trägerfolie aufweist/aufweisen, wobei der elektrische Widerstand zwischen zwei Punkten auf der elektrisch leitfähigen Elastomerschicht durch Dehnung der Elastomerfolie veränderbar ist. Wird eine solche elektrisch nichtleitfähige Elastomer-Trägerfolie verwendet, so muss die elektrisch leitfähige Schicht nicht die ganze Trägerfolie bedecken, sondern kann sich auch in Form einer Leiterbahn, z. B. in Mäanderform, auf der Trägerfolie befinden.

Ebenso kann die elektrisch leitfähige Folie oder Schicht in einem erfindungsgemäßen Dehnungssensor mit einer resistiven Elastomerfolie auch mit einer elektrisch nichtleitfähigen Elastomerschicht bedeckt sein, die ebenfalls als Schutzschicht und/oder zur Vermeidung von elektrischen Kurzschlüssen dient.

Außerdem ist es bevorzugt, dass das Material der elektrisch nichtleitfähigen Elastomerschicht in der dielektrischen Elastomerfolie und/oder das Material in der elektrisch leitfähigen und/oder in der elektrisch nichtleitfähigen Elastomerschicht in der resistiven Elastomerfolie Silicon, Fluorsilicon, Polyurethan (PUR), Polynorbornen, Naturkautschuk (NR), Styrol-Butadien (SBR), Isobutylen-Isopren (IIR), Ethylen-Propylen-Dien-Terpolymer (EPDM/EPM), Poly-Chlorbutadien (CR), Chlorsulfoniertes Polyethylen (CSM), Acrylnitril-Butadien (NBR), Hydriertes Acrylnitril-Butadien (HNBR), einen Fluorkautschuk wie Viton, ein thermoplastisches Elastomer wie thermoplastische StyrolCopolymere (Styrol-Butadien-Styrol- (SBS-), Styrol-Ethylen-Butadien-Styrol-(SEBS-), Styrol-Ethylen-Propylen-Styrol- (SEPS-), Styrol-Ethylen-Ethylen-Propylen-Styrol- (SEEPS-) oder Styrol-Isopren-Styrol- (SIS-) Copolymer), teilvernetzte Blends auf Polyolefin-Basis (aus Ethylen-Propylen-Dien-Kautschuk und Polypropylen (EPDM/PP), aus Nitril-Butadien-Kautschuk und Polypropylen (NBR/PP) oder aus Ethylen-Propylen-Dien-Kautschuk und Polyethylen(EPDM/PE)) oder thermoplastische Urethan-Copolymere (aromatisches Hartsegment und Ester-Weichsegmernt (TPU-ARES), aromatisches Hartsegment und Ether-Weichsegment (TPU-ARET) oder aromatisches Hartsegment und Ester/Ether-Weichsegment (TPU-AREE)) enthält oder daraus besteht.

Weiterhin ist es möglich, dass die elektrisch nichtleitfähige Elastomerschicht in der dielektrischen Elastomerfolie elektrisch polarisierbare Partikel wie Bariumtitanat, Bleizirkonattitanat oder Titandioxid und/oder elektrisch leitfähige Partikel aus Kohlenstoff wie Graphit, Graphen oder Carbon Nanotubes, Metalle wie Eisen, Kupfer, Silber oder Gold oder leitfähige Polymere wie Polyanilin, Polyacetylen, Polypyrrol, Polyparaphenylen oder Polythiophen oder eine organische Modifizierung zur Erhöhung der Permittivität enthält.

Bevorzugt wird außerdem, dass die elektrisch leitfähigen Elektrodenschichten in der dielektrischen Elastomerfolie oder die elektrisch leitfähige Elastomerschicht in der resistiven Elastomerfolie leitfähige Partikel aus Kohlenstoff wie Graphit, Graphen oder Carbon Nanotubes, Metalle wie Eisen, Kupfer, Silber oder Gold oder leitfähige Polymere wie Polyanilin, Polyacetylen, Polypyrrol, Polyparaphenylen oder Polythiophen enthalten.

Es ist möglich, dass das mindestens eine Steifigkeitselement einschichtig oder mehrschichtig aufgebaut ist, und bevorzugt aus dem gleichen Material besteht oder dieses enthält wie die elektrisch nicht-leitfähige(n) Elastomerschicht(en) der dielektrischen Elastomerfolie oder die elektrisch leitfähige(n) Elastomerschicht(en) oder die elektrisch nicht-leitfähige(n) Elastomerträgerschicht(en) der resistiven Elastomerfolie.

Das mindestens eine Steifigkeitselement sollte nach Möglichkeit flexibel sein, damit der gesamte Dehnungssensor eine hohe Flexibilität aufweist und damit auch um gekrümmte Oberflächen gewickelt werden kann. Bevorzugt besteht das mindestens eine Steifigkeitselement daher aus einer Folie, z. B. aus einem Metall, einem Kunststoff oder einem Elastomer, oder enthält eine solche Folie. Wenn die Folie des Steifigkeitselements aus einem Elastomer besteht, sollte dieses einen erheblich höheren E-Modul aufweisen und/oder die Folie wesentlich dicker und/oder breiter sein als die Sensorfolie, damit die relative Dehnungs-Federkonstante des Steifigkeitselements entsprechend größer ist als die der Sensorfolie und sich die Dehnung damit auf die Sensorfolie konzentriert.

Es ist auch möglich, dass das mindestens eine Steifigkeitselement aus dem gleichen Elastomermaterial besteht wie eine Schicht der Sensorfolie, wodurch die Fertigung des Dehnungssensors vereinfacht wird. Darüber hinaus ist es sogar möglich, dass sich die nichtleitfähige Elastomerfolie aus dem dielektrischen Elastomersensor oder die elektrisch leitfähige Elastomerschicht oder die elektrisch nichtleitfähige Elastomer-Trägerfolie aus dem resistiven Elastomersensor durch das Steifigkeitselement hindurchzieht. Die höhere relative Dehnungs-Federkonstante des Steifigkeitselements wird dann beispielsweise durch eine mechanische Verstärkung mit einem zusätzlichen steifen Körper oder mit einer dehnungssteifen Folie erreicht.

Es ist bevorzugt, dass das mindestens eine Steifigkeitselement in Dehnungsrichtung einen höheren Dehnungs-E-Modul als das mindestens eine Sensorelement aufweist, bevorzugt um einen Faktor von mindestens 10, besonders bevorzugt um einen Faktor von mindestens 100, ganz besonders bevorzugt um einen Faktor von mindestens 1000. Hierdurch wird erreicht, dass die relative Dehnungs-Federkonstante des Steifigkeitselements deutlich größer ist als die relativen Dehnungs-Federkonstanten der dielektrischen und/oder resistiven Elastomerfolien.

Weiter ist es bevorzugt, dass das mindestens eine Steifigkeitselement eine flexible oder biegbare Folie enthält oder daraus besteht und bevorzugt Materialen enthält, die in der dielektrischen und/oder resistiven Elastomerfolie enthalten sind. Weitere bevorzugte Materialien, die das mindestens eine Steifigkeitselement enthalten kann oder aus denen es bestehen kann, sind solche Materialien, ein Zug-Kriechmodul von ≥ 1000 MPa nach 1000 Stunden aufweist. Wenn der Dehnungssensor bei einem Langzeiteinsatz vorgedehnt wird, wird auf das mindestens eine Steifigkeitselement fortwährend eine Dehnungskraft ausgeübt. Ein Steifigkeitselement mit geringer Kriechstabilität würde mit der Zeit länger werden, wodurch das Messergebnis des kapazitiven oder resistiven Sensors verfälscht würde. Beispiele für kriechstabile Materialien für Steifigkeitselemente sind Federstahl, Polyethersulfon (PES), Polyamid (PA), Polymethylmethacrylat (PMMA), Styrol/Acrylnitril (SAN) und/oder Polyetheretherketon (PEEK). Auch ein Textilmaterial kann in Steifigkeitselementen eingesetzt werden, d.h. das mindestens eine Steifigkeitselement kann ein Textilmaterial enthalten oder daraus bestehen. Das mindestens eine Steifigkeitselement kann einen faserverstärkten oder partikelverstärkten Kunststoff enthalten oder daraus bestehen.

Eine weitere bevorzugte Ausführungsform sieht vor, dass die mindestens eine dielektrische Elastomerfolie mehr als zwei dehnbare elektrisch leitfähige Elektrodenschichten enthält, die durch elektrisch nichtleitfähige Elastomerschichten voneinander getrennt sind.

Es ist bevorzugt, dass die elektrisch leitfähige(n) Elektrodenschicht(en) der dielektrischen Elastomerfolie(n) oder die elektrisch leitfähigen Elastomerschicht(en) der resistiven Elastomerfolie(n) beidseitig von elektrisch nichtleitfähigen Elastomerschichten bedeckt sind.

Neben dem Einsatz zur Dehnungsmessung kann der erfindungsgemäße Dehnungssensor auch zur Kraftmessung, z. B. zur Messung von Zugkräften, verwendet werden.

Zwei oder mehr der erfindungsgemäßen Dehnungssensoren können auch zu einem Dehnungssensor-System oder Dehnungssensor-Netzwerk zusammengefügt werden. In einer eindimensionalen Anordnung von Dehnungssensoren werden dielektrische oder resistive Elastomerfolien vorzugsweise alternierend mit Steifigkeitselementen zu einer linearen Kette zusammengefügt. Die Steifigkeitselemente werden beispielsweise einzeln an einem Untergrund befestigt. Das Dehnungssensor-Netzwerk kann dann lokale Verschiebungen des Untergrundes zwischen den Befestigungspunkten ortsaufgelöst detektieren.

Analog dazu können auch zwei- oder dreidimensionale Dehnungssensor-Netzwerke gebildet werden, indem dielektrische oder resistive Elastomerfolien vorzugsweise alternierend mit Steifigkeitselementen zu einer zwei- oder dreidimensionalen Anordnung zusammengefügt werden.

Verwendung finden die Dehnungssensoren oder Dehnungssensor-Systeme
- zur Messung des Abstands zwischen zueinander bewegten Teilen, insbesondere in Stoß- oder Schwingungsdämpfern, Stanzmaschinen, Robotern,
- zur Überwachung der Schadensentstehung durch Verformungen in Bauwerken wie Brücken, Gebäuden oder in Industrieanlagen wie Öfen, Reaktoren, Tanks, Rohrleitungen,
- zur Überwachung von Verformungen von Bauteilen in technischen Anlagen, insbesondere Rotorblättern in Windkraftanlagen, Flugzeug-Tragflächen,
- zum Monitoring von Handbewegungen wie Fingerkrümmungen mit Dehnungssensoren in einem Handschuh,
- zum Monitoring von Körperbewegungen durch am Körper getragene Dehnungssensoren,
- zum Monitoring der Atmungsfunktion oder des Herzschlages durch Dehnungssensoren am Körper oder auf Bettunterlagen oder von Bewegungen auf weichen Unterlagen wie Betten, Sitzen oder Stühlen,
- zum Monitoring der Bewegung von Robotergreifern, oder
- zum Monitoring der Verformung von Elastomerbauteilen.

Mit den erfindungsgemäßen Dehnungssensoren auf Elastomerbasis können Dehnungen oder Abstandsänderungen entweder durch Änderungen der elektrischen Kapazität oder des elektrischen Widerstandes gemessen werden. Ein besonderer Vorteil besteht in der hohen Messempfindlichkeit besonders bei solchen Messaufgaben, bei denen kleine Dehnungen bei großen Längen bzw. Abständen gemessen werden sollen. Die Messempfindlichkeit geht weit über die Empfindlichkeit der bisher bekannten dielektrischen und resistiven Elastomersensoren hinaus. Weitere Vorteile sind der einfache Aufbau, die wenig aufwendige Messelektronik mit Mikroprozessoren und die damit verbundenen relativ niedrigen Herstellungskosten, die den Dehnungssensor auch für Massenanwendungen erschließen.

### Ausführungsbeispiele:

In der folgenden Beschreibung werden einige Ausführungsbeispiele der Erfindung dargestellt. Diese sollen dazu dienen spezifische Ausführungsformen zu zeigen, ohne die Erfindung auf diese Varianten einzuschränken.

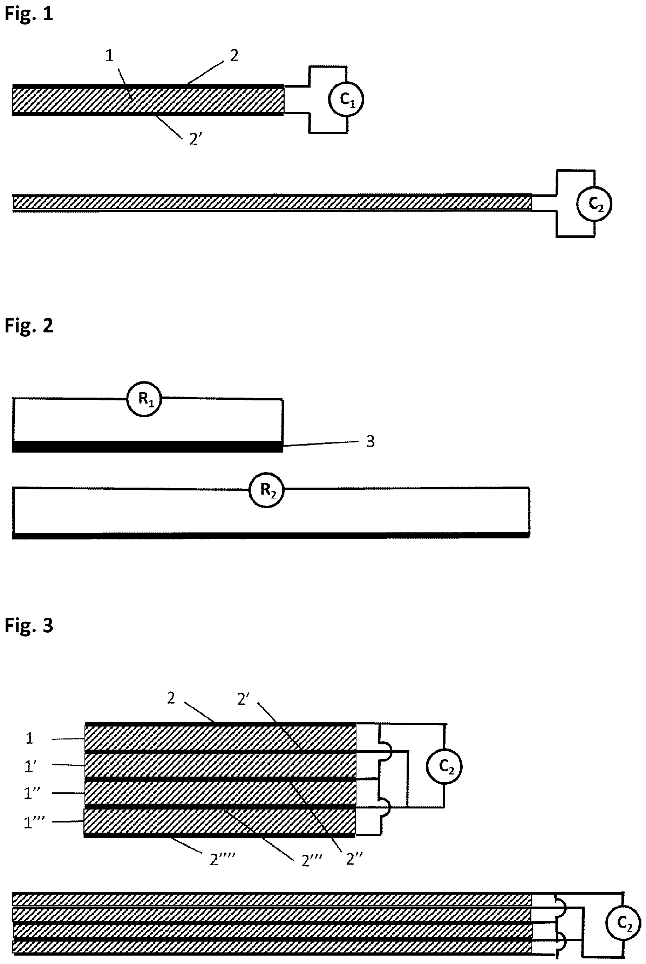

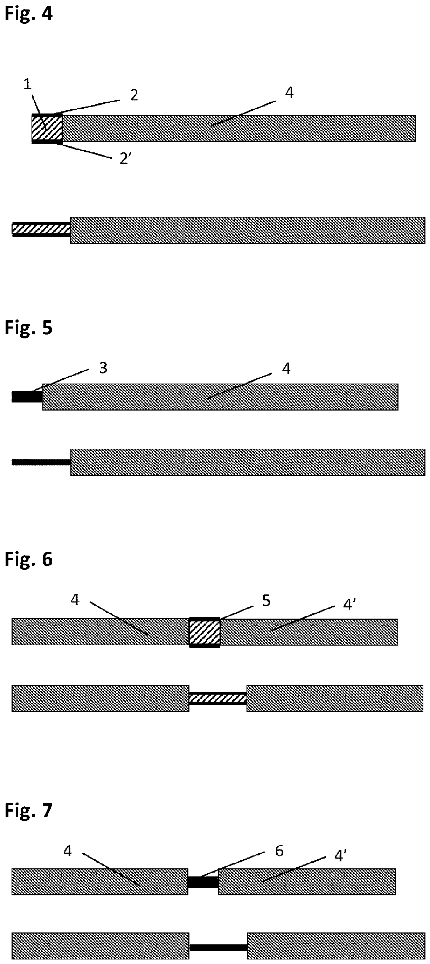

Die Figuren 1 bis 3 zeigen verschiedene Versionen von dielektrischen und resistiven Elastomer-Dehnungssensoren nach dem Stand der Technik. Die Figuren 4 bis 21 zeigen erfindungsgemäße Dehnungssensoren.
Figur 1 zeigt im Querschnitt einen dielektrischen Elastomer-Dehnungssensor, bestehend aus einer elektrisch nichtleitfähigen Elastomerschicht 1 in der Mitte und zwei elektrisch leitfähigen Elektrodenschichten 2 darüber und 2' darunter. Bei der Dehnung ändert sich die Kapazität von C₁ auf C₂.
Figur 2 zeigt im Querschnitt einen resistiven Elastomer-Dehnungssensor, bestehend aus einer elektrisch leitfähigen Elastomerschicht 3. Bei der Dehnung ändert sich der Widerstand von R₁ auf R₂.
Figur 3 zeigt im Querschnitt einen dielektrischen Elastomer-Dehnungssensor, bestehend aus vier elektrisch nichtleitfähigen Elastomerschichten 1, 1', 1" und 1"' sowie fünf elektrisch leitfähigen Elektrodenschichten 2, 2', 2", 2'" und 2"", die alternierend elektrisch kontaktiert sind. Bei der Dehnung ändert sich die Kapazität von C₁ auf C₂.

### Ausführungsbeispiel 1

Figur 4 zeigt im Querschnitt einen Dehnungssensor mit kapazitivem Messprinzip, bestehend aus einer dielektrischen Elastomerfolie mit einer elektrisch nichtleitfähigen Elastomerschicht 1 und zwei elektrisch leitfähigen Elektrodenschichten 2 und 2' sowie einem Steifigkeitselement 4, im ungedehnten Zustand (oben) und im gedehnten Zustand (unten).

### Ausführungsbeispiel 2

Figur 5 zeigt im Querschnitt einen Dehnungssensor mit resistivem Messprinzip, bestehend aus einer resistiven Elastomerfolie mit einer elektrisch leitfähigen Elastomerschicht 3 sowie einem Steifigkeitselement 4, im ungedehnten Zustand (oben) und im gedehnten Zustand (unten).

### Ausführungsbeispiel 3

Figur 6 zeigt im Querschnitt einen Dehnungssensor mit kapazitivem Messprinzip, bestehend aus einer dielektrischen Elastomerfolie 5 sowie zwei Steifigkeitselementen 4 und 4', im ungedehnten Zustand (oben) und im gedehnten Zustand (unten).

### Ausführungsbeispiel 4

Figur 7 zeigt im Querschnitt einen Dehnungssensor mit resistivem Messprinzip, bestehend aus einer resistiven Elastomerfolie 6 sowie zwei Steifigkeitselementen 4 und 4', im ungedehnten Zustand (oben) und im gedehnten Zustand (unten).

### Ausführungsbeispiel 5

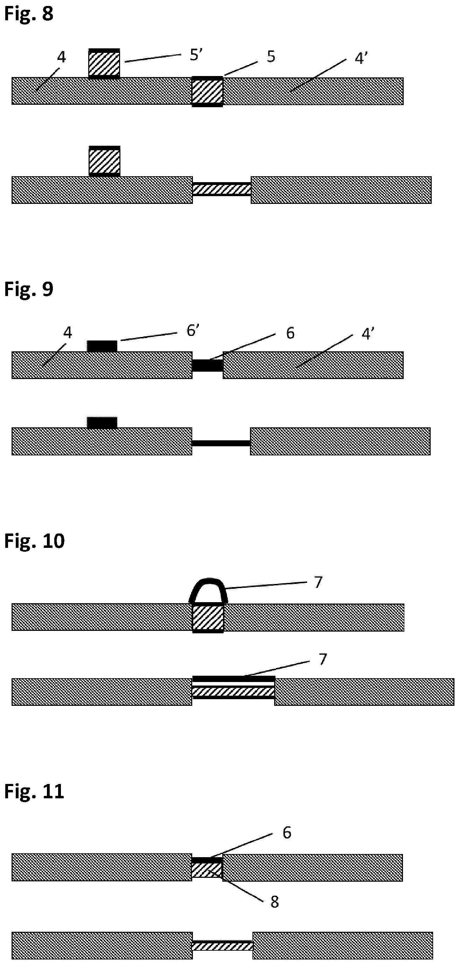

Figur 8 zeigt im Querschnitt einen Dehnungssensor mit kapazitivem Messprinzip, bestehend aus einer dielektrischen Elastomerfolie 5, zwei Steifigkeitselementen 4 und 4' sowie einer zweiten dielektrischen Elastomerfolie 5' auf dem Steifigkeitselement 4, im ungedehnten Zustand (oben) und im gedehnten Zustand (unten).

### Ausführungsbeispiel 6

Figur 9 zeigt im Querschnitt einen Dehnungssensor mit resistivem Messprinzip, bestehend aus einer resistiven Elastomerfolie 6, zwei Steifigkeitselementen 4 und 4' sowie einer zweiten resistiven Elastomerfolie 6' auf dem Steifigkeitselement 4, im ungedehnten Zustand (oben) und im gedehnten Zustand (unten).

### Ausführungsbeispiel 7

Figur 10 zeigt im Querschnitt einen Dehnungssensor mit kapazitivem Messprinzip, bestehend aus einer dielektrischen Elastomerfolie, zwei Steifigkeitselementen sowie einer Folie 7 mit hoher Dehnungssteifigkeit, im ungedehnten Zustand (oben) und im gedehnten Zustand (unten).

### Ausführungsbeispiel 8

Figur 11 zeigt im Querschnitt einen Dehnungssensor mit resistivem Messprinzip, bestehend aus einer elektrisch leitfähigen Elastomerschicht 6 auf einer elektrisch nichtleitfähigen Elastomerschicht 8 als Trägerfolie sowie zwei Steifigkeitselementen, im ungedehnten Zustand (oben) und im gedehnten Zustand (unten).

### Ausführungsbeispiel 9

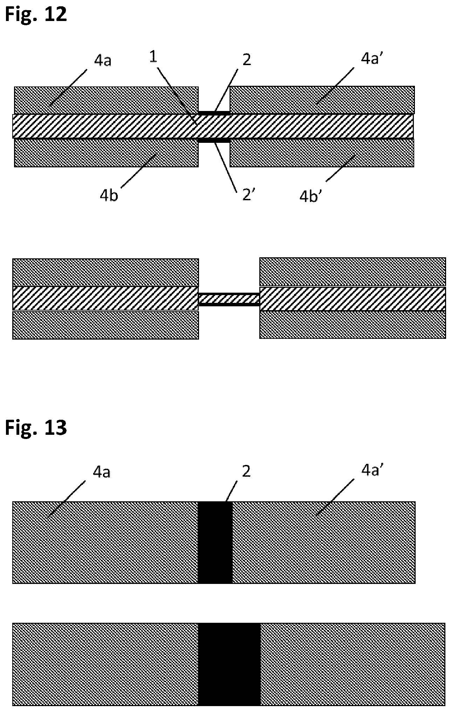

Figur 12 zeigt im Querschnitt einen Dehnungssensor mit kapazitivem Messprinzip, bestehend aus einer dielektrischen Elastomerfolie mit einer elektrisch nichtleitfähigen Elastomerschicht 1 und zwei elektrisch leitfähigen Elektrodenschichten 2 und 2' sowie zwei Steifigkeitselementen 4 und 4', die jeweils aus den zwei Komponenten 4a und 4b sowie 4a' und 4b' bestehen, zwischen denen sich die elektrisch nichtleitfähige Elastomerschicht 1 hindurchzieht, im ungedehnten Zustand (oben) und im gedehnten Zustand (unten).

### Ausführungsbeispiel 10

Figur 13 zeigt in der Aufsicht einen Dehnungssensor mit kapazitivem Messprinzip, bestehend aus einer dielektrischen Elastomerfolie mit einer elektrisch nichtleitfähigen Elastomerschicht 1 (nicht sichtbar) und zwei elektrisch leitfähigen Elektrodenschichten 2 und 2' (nicht sichtbar) sowie zwei Steifigkeitselementen 4 und 4', die jeweils aus den zwei Komponenten 4a und 4b (nicht sichtbar) sowie 4a' und 4b' (nicht sichtbar) bestehen, zwischen denen sich die elektrisch nichtleitfähige Elastomschicht 1 (nicht sichtbar) hindurchzieht, im ungedehnten Zustand (oben) und im gedehnten Zustand (unten).

### Ausführungsbeispiel 11

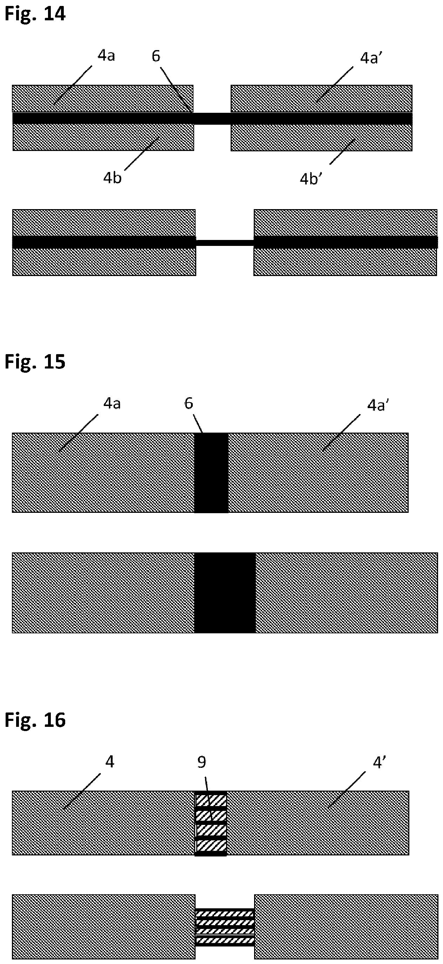

Figur 14 zeigt im Querschnitt einen Dehnungssensor mit resistivem Messprinzip, bestehend aus einer elektrisch leitfähigen Elastomerschicht 6 sowie zwei Steifigkeitselementen 4 und 4', die jeweils aus den zwei Komponenten 4a und 4b sowie 4a' und 4b' bestehen, zwischen denen sich die elektrisch leitfähige Elastomerschicht 6 hindurchzieht, im ungedehnten Zustand (oben) und im gedehnten Zustand (unten).

### Ausführungsbeispiel 12

Figur 15 zeigt in der Aufsicht einen Dehnungssensor mit resistivem Messprinzip, bestehend aus einer leitfähigen Elastomerschicht 6 sowie zwei Steifigkeitselementen 4 und 4', die jeweils aus den zwei Komponenten 4a und 4b (nicht sichtbar) sowie 4a' und 4b' (nicht sichtbar) bestehen, zwischen denen sich die elektrisch leitfähige Elastomerschicht 6 hindurchzieht, im ungedehnten Zustand (oben) und im gedehnten Zustand (unten).

### Ausführungsbeispiel 13

Figur 16 zeigt im Querschnitt einen Dehnungssensor mit kapazitivem Messprinzip, bestehend aus einer dielektrischen Elastomerfolie 9 mit vier elektrisch nichtleitfähigen Elastomerschichten und fünf elektrisch leitfähigen Elektrodenschichten sowie zwei Steifigkeitselementen 4 und 4', im ungedehnten Zustand (oben) und im gedehnten Zustand (unten).

### Ausführungsbeispiel 14

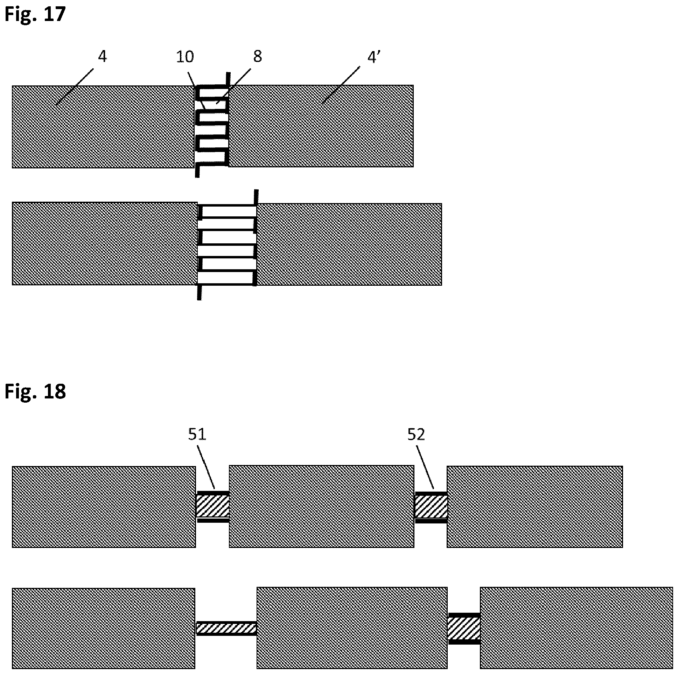

Figur 17 zeigt in der Aufsicht einen Dehnungssensor mit resistivem Messprinzip, bestehend aus einer elektrisch leitfähigen in Mäanderform geführten Elastomerschicht 10 auf einer elektrisch nichtleitfähigen Elastomerschicht 8 als Trägerfolie sowie zwei Steifigkeitselementen 4 und 4', im ungedehnten Zustand (oben) und im gedehnten Zustand (unten).

### Ausführungsbeispiel 15

Figur 18 zeigt im Querschnitt ein eindimensionales Dehnungssensor-Array mit kapazitivem Messprinzip, bestehend aus dielektrischen Elastomerfolien 51 und 52 zwischen Steifigkeitselementen, im ungedehnten Zustand (oben) und im gedehnten Zustand der dielektrischen Elastomerfolie 51 (unten).

### Ausführungsbeispiel 16

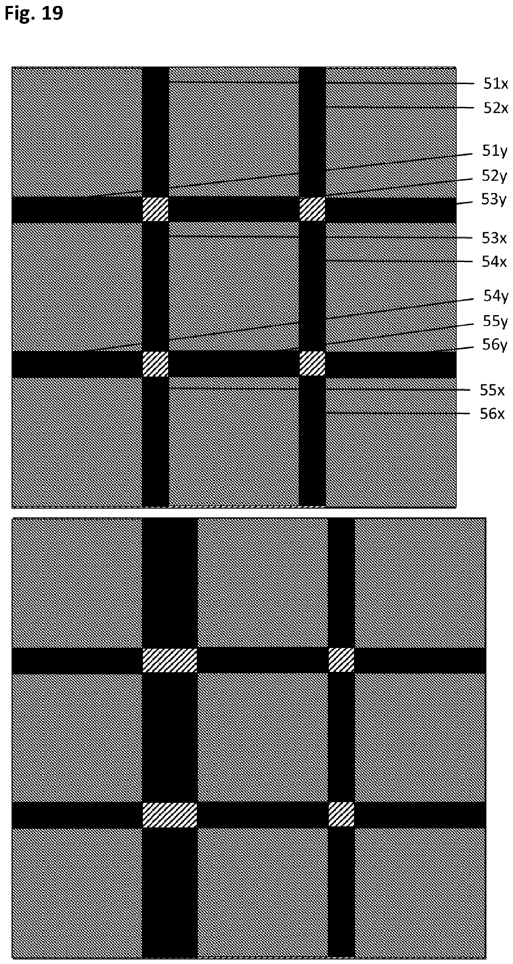

Figur 19 zeigt in der Aufsicht ein zweidimensionales Dehnungssensor-Array mit kapazitivem Messprinzip, bestehend aus dielektrischen Elastomerfolien 51x, 52x, 53x, 54x, 55x, 56x, 51y, 52y, 53y, 54y, 55y und 56y zwischen Steifigkeitselementen, im ungedehnten Zustand (oben) und im gedehnten Zustand der dielektrischen Elastomerfolien 51x, 53x und 55x (unten).

### Ausführungsbeispiel 17

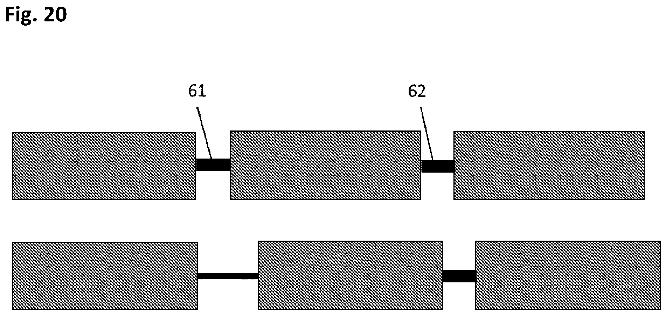

Figur 20 zeigt im Querschnitt ein eindimensionales Dehnungssensor-Array mit resistivem Messprinzip, bestehend aus elektrisch leitfähigen Elastomerfolien 61 und 62 zwischen Steifigkeitselementen, im ungedehnten Zustand (oben) und im gedehnten Zustand der resistiven Elastomerfolie 61 (unten).

### Ausführungsbeispiel 18

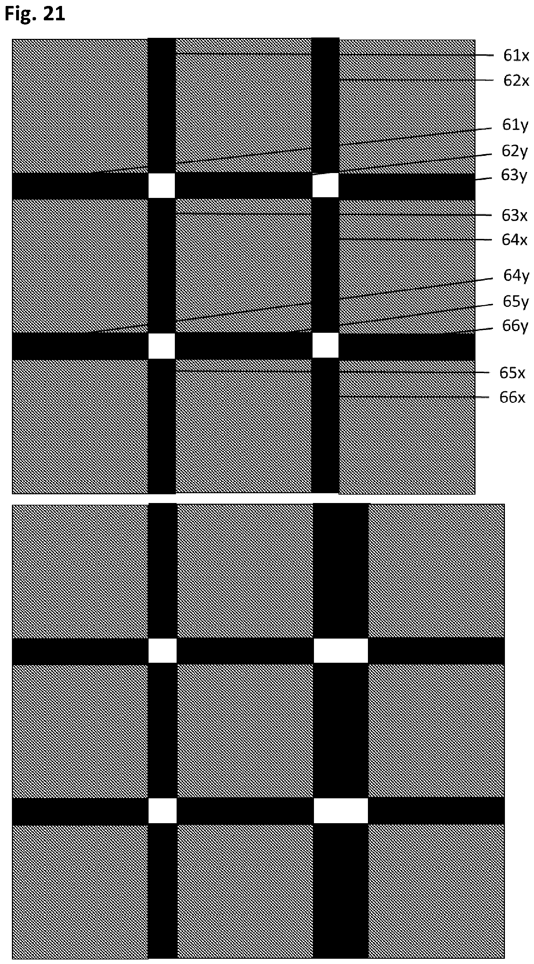

Figur 21 zeigt in der Aufsicht ein zweidimensionales Dehnungssensor-Array mit resistivem Messprinzip, bestehend aus elektrisch leitfähigen Elastomerfolien 61x, 62x, 63x, 64x, 65x, 66x, 61y, 62y, 63y, 64y, 65y und 66y zwischen Steifigkeitselementen, im ungedehnten Zustand (oben) und im gedehnten Zustand der resistiven Elastomerfolien 62x, 64x und 66x (unten).

## Patentansprüche

1. Kapazitiver und/oder resistiver Dehnungssensor enthaltend mindestens ein Sensorelement und mindestens ein Steifigkeitselement, die mechanisch miteinander verbunden sind,
wobei das mindestens eine Sensorelement mindestens eine dielektrische und/oder resistive Elastomerfolie, deren Kapazität und/oder elektrischer Widerstand durch Dehnung der mindestens einen Elastomerfolie veränderbar ist, aufweist und
wobei das mindestens eine Steifigkeitselement eine größere relative Dehnungs-Federkonstante in Dehnungsrichtung als die mindestens eine dielektrische und/oder resistive Elastomerfolie aufweist und wobei an der mindestens einen dielektrischen und/oder resistiven Elastomerfolie mindestens zwei elektrische Zuleitungen für den Anschluss einer Messvorrichtung für die Bestimmung der elektrischen Kapazität und/oder des elektrischen Widerstands angeschlossen sind.

2. Dehnungssensor nach Anspruch 1,
**dadurch gekennzeichnet, dass** die relative Dehnungs-Federkonstante des mindestens einen Steifigkeitselements in Dehnungsrichtung um einen Faktor von mindestens 2 größer ist als die relative Dehnungs-Federkonstante der mindestens einen dielektrischen oder resistiven Elastomerfolie in Dehnungsrichtung, bevorzugt um einen Faktor von mindestens 10, besonders bevorzugt um einen Faktor von mindestens 100, ganz besonders bevorzugt um einen Faktor von mindestens 1000.

3. Dehnungssensor nach einem der Ansprüche 1 oder 2,
**dadurch gekennzeichnet, dass** das Steifigkeitselement in Dehnungsrichtung länger ist als die dielektrische oder resistive Elastomerfolie oder, im Falle mehrerer Steifigkeitselemente und/oder Elastomerfolien, die Gesamtlänge aller Steifigkeitselemente in Dehnungsrichtung größer ist als die Gesamtlänge aller dielektrischen und/oder resistiven Elastomerfolien, bevorzugt um einen Faktor von mindestens 2, besonders bevorzugt um einen Faktor von mindestens 5, ganz besonders bevorzugt um einen Faktor von mindestens 10.

4. Dehnungssensor nach einem der Ansprüche1 bis 3,
**dadurch gekennzeichnet, dass** sich das Steifigkeitselement in Dehnungsrichtung an das Sensorelement anschließt oder, im Falle mehrerer Steifigkeitselemente und/oder Sensorelemente, Steifigkeitselemente und Sensorelemente sich alternierend in Dehnungsrichtung aneinander anschließen.

5. Dehnungssensor nach einem der Ansprüche 1 bis 4,
**dadurch gekennzeichnet, dass** die mindestens eine dielektrische und/oder resistive Elastomerfolie eine Reißdehnung von mindestens 100 %, bevorzugt mindestens 200 %, besonders bevorzugt mindestens 300 % aufweist.

6. Dehnungssensor nach einem der Ansprüche 1 bis 5,
**dadurch gekennzeichnet, dass** das mindestens eine Steifigkeitselement senkrecht zur Dehnungsrichtung breiter und/oder dicker ist als das mindestens eine Sensorelement, bevorzugt um einen Faktor von mindestens 2, besonders bevorzugt um einen Faktor von mindestens 5, ganz besonders bevorzugt um einen Faktor von mindestens 10 und/oder
das mindestens eine Steifigkeitselement in Dehnungsrichtung einen höheren Dehnungs-E-Modul als das mindestens eine Sensorelement aufweist, bevorzugt um einen Faktor von mindestens 10, besonders bevorzugt um einen Faktor von mindestens 100, ganz besonders bevorzugt um einen Faktor von mindestens 1000.

7. Dehnungssensor nach einem der Ansprüche 1 bis 6,
**dadurch gekennzeichnet, dass** die Breite der mindestens einen dielektrischen und/oder resistiven Elastomerfolie senkrecht zur Dehnungsrichtung größer ist als ihre Länge parallel zur Dehnungsrichtung, bevorzugt um einen Faktor von mindestens 2, besonders bevorzugt um einen Faktor von mindestens 3, ganz besonders bevorzugt um einen Faktor von mindestens 5
und/oder
dass die dielektrische und/oder resistive Elastomerfolie vorgedehnt ist, bevorzugt um mindestens 10 %, besonders bevorzugt um mindestens 30 % und ganz besonders bevorzugt um mindestens 50 %.

8. Dehnungssensor nach einem der Ansprüche 1 bis 7,
**dadurch gekennzeichnet, dass** an dem mindestens einen Steifigkeitselement mindestens eine Folie mit hoher Dehnungssteifigkeit befestigt ist, die parallel zur dielektrischen und/oder resistiven Elastomerfolie angeordnet ist, länger als diese und damit nicht gerade ausgerichtet, sondern gewellt ist und als Überdehnungsschutz die Dehnung der dielektrischen Elastomerfolie nur soweit zulässt, bis die Länge der dielektrischen und/oder resistiven Elastomerfolie die Länge der Folie mit hoher Dehnungssteifigkeit erreicht.

9. Dehnungssensor nach einem der Ansprüche 1 bis 8,
**dadurch gekennzeichnet, dass**
mindestens eine Referenzfolie, die aus dem gleichen Material wie die dielektrische(n) und/oder resistive(n) Elastomerfolie(n) besteht, auf dem mindestens einen Steifigkeitselement oder auf einem anderen steifen Element angeordnet ist und damit wenig oder nicht gedehnt wird und zur Kompensation von Umgebungseinflüssen wie Temperatur oder Feuchtigkeit verwendet wird; und/oder
die Messelektronik zur Messung der Kapazität und/oder des Widerstandes, und/oder weitere Sensoren zur Bestimmung von Temperatur, Feuchtigkeit, chemischen Substanzen und/oder anderen Messgrößen, auf dem mindestens einen Steifigkeitselement oder auf einem anderen steifen Element angeordnet ist/sind.

10. Dehnungssensor nach einem der Ansprüche 1 bis 9,
**dadurch gekennzeichnet, dass** das mindestens eine Steifigkeitselement
i) eine flexible oder biegbare Folie enthält oder daraus besteht und bevorzugt Materialen enthält, die in der dielektrischen und/oder resistiven Elastomerfolie enthalten sind; und/oder
ii) ein Zug-Kriechmodul von ≥ 1000 MPa nach 1000 Stunden aufweist; und/oder
iii) Federstahl, Polyethersulfon (PES), Polyamid (PA), Polymethylmethacrylat (PMMA), Styrol/Acrylnitril (SAN) und/oder Polyetheretherketon (PEEK) enthält oder daraus besteht; und/oder
iv) einen faserverstärkten oder partikelverstärkten Kunststoff enthält oder daraus besteht.

11. Dehnungssensor nach einem der Ansprüche 1 bis 10,
**dadurch gekennzeichnet, dass** die dielektrische Elastomerfolie(n) mindestens eine dehnbare elektrisch nicht-leitfähige Elastomerschicht und mindestens zwei dehnbare elektrisch leitfähige Elektrodenschichten aufweist/aufweisen, wobei die elektrisch nicht-leitfähige Elastomerschicht zwischen zwei elektrisch leitfähigen Elektrodenschichten angeordnet ist und durch Dehnung der Elastomerfolie die Kapazität veränderbar ist
und/oder
dass die resistive Elastomerfolie(n) mindestens eine dehnbare elektrisch leitfähige Elastomerschicht und ggf. mindestens eine elektrisch nicht-leitfähige Elastomerträgerschicht aufweist/aufweisen, wobei der elektrische Widerstand zwischen zwei Punkten auf der elektrisch leitfähigen Elastomerschicht durch Dehnung der Elastomerfolie veränderbar ist.

12. Dehnungssensor nach Anspruch 11,
**dadurch gekennzeichnet, dass** das mindestens eine Steifigkeitselement einschichtig oder mehrschichtig aufgebaut ist, und bevorzugt aus dem gleichen Material besteht oder dieses enthält wie die elektrisch nichtleitfähige(n) Elastomerschicht(en) der dielektrischen Elastomerfolie oder die elektrisch leitfähige(n) Elastomerschicht(en) oder die elektrisch nichtleitfähige(n) Elastomerträgerschicht(en) der resistiven Elastomerfolie und/oder
dass sich die elektrisch nichtleitfähige(n) Elastomerschicht(en) der dielektrischen Elastomerfolie(n) oder die elektrisch leitfähige(n) Elastomerschicht(en) oder die elektrisch nichtleitfähige(n) Elastomerträgerschicht(en) der resistiven Elastomerfolie(n) durch das mindestens eine Steifigkeitselement hindurchzieht/hindurchziehen und/oder
dass die mindestens eine dielektrische Elastomerfolie mehr als zwei dehnbare elektrisch leitfähige Elektrodenschichten enthält, die durch elektrisch nichtleitfähige Elastomerschichten voneinander getrennt sind und/oder
dass die elektrisch leitfähige(n) Elektrodenschicht(en) der dielektrischen Elastomerfolie(n) und/oder die elektrisch leitfähigen Elastomerschicht(en) der resistiven Elastomerfolie(n) beidseitig von elektrisch nichtleitfähigen Elastomerschichten bedeckt ist/sind.

13. Kapazitives und/oder resistives Dehnungssensor-System enthaltend mindestens zwei Dehnungssensoren nach einem der vorangehenden Ansprüche.

14. Dehnungssensor-System nach Anspruch 13, **dadurch gekennzeichnet, dass** die Dehnungssensoren in einer eindimensionalen oder zweidimensionalen oder dreidimensionalen Anordnung zueinander positioniert sind.

15. Verwendung des Dehnungssensors nach einem der Ansprüche 1 bis 12 oder des Dehnungssensor-Systems nach einem der Ansprüche 13 oder 14
• zur Messung des Abstands zwischen zueinander bewegten Teilen, insbesondere in Stoß- oder Schwingungsdämpfern, Stanzmaschinen, Robotern,
• zur Überwachung der Schadensentstehung durch Verformungen in Bauwerken wie Brücken, Gebäuden oder in Industrieanlagen wie Öfen, Reaktoren, Tanks, Rohrleitungen,
• zur Überwachung von Verformungen von Bauteilen in technischen Anlagen, insbesondere Rotorblättern in Windkraftanlagen, Flugzeug-Tragflächen,
• zum Monitoring von Handbewegungen wie Fingerkrümmungen mit Dehnungssensoren in einem Handschuh,
• zum Monitoring von Körperbewegungen durch am Körper getragene Dehnungssensoren,
• zum Monitoring der Atmungsfunktion oder des Herzschlages durch Dehnungssensoren am Körper oder auf Bettunterlagen oder von Bewegungen auf weichen Unterlagen wie Betten, Sitzen oder Stühlen,
• zum Monitoring der Bewegung von Robotergreifern, oder
• zum Monitoring der Verformung von Elastomerbauteilen.
